(19) 

Europäisches
Patentamt
European
Patent Office
Office européen
des brevets

(11)  **EP 2 631 720 A1**

(12)  # EUROPEAN PATENT APPLICATION

(43) Date of publication:
**28.08.2013 Bulletin 2013/35**

(51) Int Cl.:
**G03H 1/08** $^{(2006.01)}$   **G02B 5/18** $^{(2006.01)}$
**G03H 1/22** $^{(2006.01)}$

(21) Application number: **13000759.4**

(22) Date of filing: **14.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.02.2012 KR 20120018414**

(71) Applicant: **LG Electronics, Inc.**
**Seoul, 150-721 (KR)**

(72) Inventors:
• **Kwon, Dowoo**
  **137-724 Seoul (KR)**
• **Moon, Wonseok**
  **137-724 Seoul (KR)**
• **Park, Woojae**
  **137-724 Seoul (KR)**

(74) Representative: **Katérle, Axel**
**Wuesthoff & Wuesthoff**
**Patent- und Rechtsanwälte**
**Schweigerstraße 2**
**81541 München (DE)**

(54)  **Holographic display device and method for generating hologram**

(57)   A holographic display device and a method for generating a hologram are disclosed.

The holographic display device generating a hologram includes a storage unit (180) and a control unit (190). Herein, the storage unit stores at least one look-up table each storing a partial size (400, 600) of a full size (300,500) sub-hologram for reconstructing object point (OP), wherein the object points (OP) are included in a scene reconstructed by the generated hologram. And, the control unit uses at least one look-up table each having the partial size, so as to calculate hologram values for the sub-holograms for reconstructing object points (OP), wherein the object points (OP) are included in the scene, and then the control unit generates the hologram by overlapping the hologram values of the sub-holograms.

FIG. 2A

EP 2 631 720 A1

# FIG. 4

400

**Description**

## BACKGROUND OF THE INVENTION

### Field of the Invention

The present invention relates to a holographic display device and a method for generating a hologram and, more particularly, to a holographic display device generating a hologram by overlaying sub-holograms and a method for generating a hologram.

### Discussion of the Related Art

Computer Generated Holograms (CGHs) may include a calculation method resulting from a ray tracing method, a calculation method using a reference table (referred to as a look-up table), and a method adopting a fast fourier transform (FFT) method. Additionally, the CGHs may also include general holograms using a large viewing angle and sub-holograms having limited viewing angles. Herein, when calculating a sub-hologram, a look-up table may also be used. And, by using the look-up table, a computing speed may be largely enhanced.

In the related art method for generating (or creating) general holograms, a thesis entitled "Interactive computation of holograms using a look-up table", which is proposed by M. Lucente, in 1993, which has remarkably upgraded the computing speed when using a look-up table algorithm, demonstrates a result of enhancing (or upgrading) the computing speed to 26 times the conventional computing speed by using a parallel processing machine referred to as CM2. Additionally, a system being operated in a general personal computer (PC) by using a Matlab programming language, which is configured based upon an "Effective generation of digital holograms of three-dimensional objects using a novel look-up table", which is presented by Seung-Cheol Kim, in 2008, demonstrates a result of enhancing (or upgrading) the computing speed to 70 times the conventional computing speed.

Up until now, research and development is consistently and globally in progress for realizing real-time CGH calculating performance by using a look-up table (LUT), when using a fast parallel computing solution, such as a graphics processing unit (GPU).

In a method for generating sub-hologram type CGH, the size of the LUT that is essentially used is considerably smaller than general holograms. This is because, when it is given that a general hologram shows a 1920×1080 resolution, and when it is respectively given that a sub-hologram forms a viewing window respective to a viewer (or user) having the size of 2m, when an object point, which is spaced apart from the hologram at a distance of 1m, has an LUT having a resolution corresponding to the size of the viewing window, one object point may be identically displayed.

The viewing window is generally formed to have size slightly larger than the pupils of a general type of human being, which corresponds to 6~12mm. And, when this size is converted to pixel units, provided that a pixel size is equal to 156$\mu$m, the LUT may be configured to have a 76×76 resolution. The difference between a general hologram and a sub-hologram is that, in a sub-hologram, a range of the viewing angle that can be viewed by the viewer (or user) is limited. However, when using the LUT, a sub-hologram is more advantageous in that the LUT may be configured to have a size much smaller than the size of the LUT used in the related art general hologram. By using such LUT, it may become easier and simpler to configure a sub-hologram based real-time holographic display system. Accordingly, by using only limited hardware performance (GPU: NVIDIA 7900 GTX), VISIO 20 prototype, which was presented by SeeReal at SID, in 2007, was capable of presenting real-time holographic demonstration.

Evidently, when designing the hardware as high-end hardware, a hologram may be generated in real-time without using any look-up table. However, in order to design a solution that can generate real-time holograms while configuring the hardware as low-end hardware, the use and application of look-up tables may be very efficient.

## SUMMARY OF THE INVENTION

Accordingly, the present invention is directed to a holographic display device and a method for generating a hologram that substantially obviate one or more problems due to limitations and disadvantages of the related art.

An object of the present invention is to provide a holographic display device and a method for generating a hologram that can maintain a memory size required for storing a look-up table and that can expand a three-dimensional (3D) display space.

Another object of the present invention is to provide a holographic display device and a method for generating a hologram that can reduce the size of a look-up table, so as to reduce the required usage of memory capacity, which is required for storing the look-up table, and that can reduce the time required for reading the look-up table, so as to swiftly generate real-time holograms.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a holographic display device generating a hologram may include a storage unit configured to store at least one look-up table each having a partial size of a full size of sub-holograms for reconfiguring object points, wherein the object points are included in a scene reconfigured of the generated hologram, and a control unit configured to use at least one look-up table each having the partial size, to calculate hologram values of the sub-holograms for reconfiguring object points, wherein the object points are included in the scene, and to generate the hologram by overlapping the hologram values of the sub-holograms.

The holographic display device may further include a spatial light modulator configured to indicate an interference fringe of the generated hologram.

The control unit may calculate a position and size of the sub-holograms within a surface of the spatial light modulator, based upon depth information of the object points and position information of a user and calculates hologram values marked on pixels included in a range of the spatial light modulator that is indicated by the calculated position and size.

The control unit may acquire information on a position of the sub-holograms, the position being related to the hologram values, from the information included in at least one look-up table having the partial size of a related sub-hologram by using a coordinate matching method, and the control unit may calculate the hologram values by using the acquired information.

The control unit may generate a look-up table having a size corresponding to the size of each sub-hologram based upon the at least one look-up table having the partial size of a related sub-hologram, and the control unit may calculate the hologram values by using the generated look-up table.

The partial size may include at least one of a size corresponding to a half of the size of each sub-hologram, a size corresponding to a quarter of the size of each sub-hologram, a size corresponding to the size of one line, and a size corresponding to the size of a half of one line.

The look-up table may include information for calculating a hologram value included in at least one of an area corresponding to one half, an area corresponding to one quarter, an area corresponding to one line, and an area corresponding to one half of a line of a related sub-hologram.

Different forms of look-up tables may be stored in the storage unit with respect to a depth value of each object point.

The look-up table may be stored in the storage unit with respect to each depth value, and look-up tables of object points having the same depth value may be identical to one another.

The look-up table may include a phase value for calculating hologram values of the sub-holograms.

The control unit may detect pupil positions of the user based upon a recorded image of the user, acquires position information of the user based upon the detected pupil positions, decides a position of a viewing window based upon the acquired user position information, and may calculate position and size of each sub-hologram within a surface of a spatial light modulator based upon the decided position of the viewing window and depth information of each object point.

A depth area of a three-dimensional (3D) display area, wherein the 3D display area corresponds to a spatial area in which the scene is displayed, may be extended in accordance with a ratio between a size of each sub-hologram and a size of the look-up table.

A used capacity of a memory, wherein the memory is configured to store the at least one look-up table, may be reduced in accordance with a ratio between a size of each sub-hologram and a size of the look-up table.

In order to achieve another object of the present invention, as embodied and broadly described herein, a method for generating a hologram in a holographic display device including a storage unit and a spatial light modulator may include the steps of accessing at least one look-up table each having a partial size of a full size of sub-holograms for reconfiguring object points from the storage unit, wherein the object points are included in a scene reconfigured of the generated hologram, using the at least one accessed look-up table each having the partial size and calculating hologram values of the sub-holograms for reconfiguring object points, and repeating the accessing step and the calculating step for the object points included in the reconfigured scene, thereby generating the hologram by overlapping the calculated hologram values of the sub-holograms.

The method for generating a hologram may further include the steps of detecting pupil positions of the user based upon a recorded image of the user, acquires position information of the user based upon the detected pupil positions, deciding a position of a viewing window based upon the acquired user position information, and calculating position and size of each sub-hologram within a surface of a spatial light modulator based upon the decided position of the viewing window and depth information of each object point.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates a preferable example of a holographic display device according to the present invention;

FIG. 2A and FIG. 2Bb illustrate object points within a 3D display area of the holographic display device according to the present invention;

FIG. 3 illustrates a fringe pattern of a sub-hologram for a single object point according to a first exemplary embodiment of the present invention;

FIG. 4 illustrates information on a look-up table according to the first exemplary embodiment of the present invention in the form of an image;

FIG. 5 illustrates a fringe pattern of a sub-hologram for a single object point according to a second exemplary embodiment of the present invention;

FIG. 6 illustrates information on a look-up table according to the second exemplary embodiment of the present invention in the form of an image;

FIG. 7 illustrates a fringe pattern of a sub-hologram for a single object point according to a third exemplary embodiment of the present invention;

FIG. 8 illustrates information on a look-up table according to the third exemplary embodiment of the present invention in the form of an image; and

FIG. 9 illustrates a flow chart showing preferred process steps for performing a method for generating a hologram according to the present invention.

## DETAILED DESCRIPTION OF THE INVENTION

Reference will now be made in detail to the preferred embodiments of the present invention, examples of which are illustrated in the accompanying drawings. However, the embodiment of the present invention described below may be modified to a wide range of modifications. And, therefore, it should be understood that the essential structure and application of the present invention will not be limited only to the example presented in the description of the present invention set forth herein.

Although the terms used in the present invention are selected from generally known and used terms, the terms used herein may be varied or modified in accordance with the intentions or practice of anyone skilled in the art, or along with the advent of a new technology. Alternatively, in some particular cases, some of the terms mentioned in the description of the present invention may be selected by the applicant at his or her discretion, the detailed meanings of which are described in relevant parts of the description herein. Furthermore, it is required that the present invention is understood not simply by the actual terms used but by the meaning of each term lying within.

Additionally, it should be understood that specific structural and functional description with respect to the exemplary embodiments according to the concept of the present invention, which is disclosed in the description of the present invention, are merely examples given for the purpose of providing a description of the exemplary embodiments of the present invention according to the concept of the present invention. Accordingly, diverse variations may be performed on the exemplary embodiments of the present invention. And, therefore, it should be understood that the scope and spirit of the present invention will not be limited only to the exemplary embodiments presented in the description of the present invention set forth herein.

Since diverse variations may be performed on the exemplary embodiments of the present invention, and since the embodiments of the present invention can be realized in a wide range of varied forms, specific exemplary embodiments of the present invention will be described herein in detail with reference to the appended drawings of the exemplary embodiments of the present invention. However, the present invention will not be limited only to the specific exemplary embodiments of the present invention, which are disclosed herein. Therefore, it should be understood that the scope and spirit of the present invention can be extended to all variations, equivalents, and replacements in addition to the appended drawings of the present invention.

Furthermore, terms including numeric expressions, such as first ($1^{st}$), second ($2^{nd}$), and so on, used in the specification of the present invention may be used to describe diverse elements of the present invention. However, the elements of the present invention should not be limited by the terms used in the specification of the present invention. In other words, such terms will be used only to differentiate one element from other elements of the present invention. For example, without deviating from the scope and spirit of the present invention, a first element may be referred to as a second element, and, similarly, a second element may also be referred to as a first element.

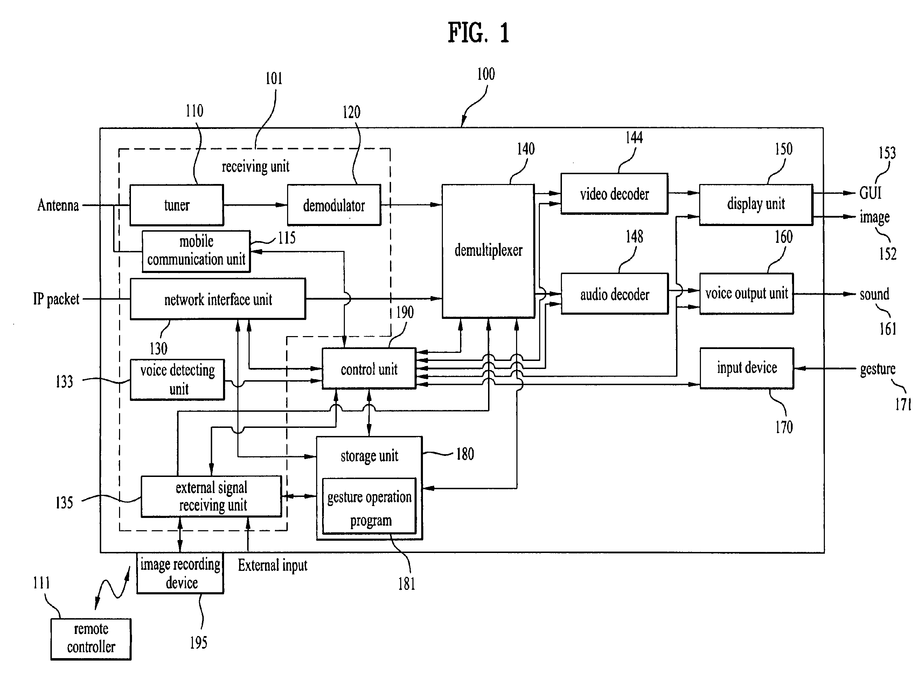

FIG. 1 illustrates a preferable example of a holographic display device according to the present invention.

Referring to FIG. 1, the holographic display device 100 according to the present invention may include at least one of a receiving unit 101, a demultiplexer 140, a video decoder 144, an audio decoder 148, a display unit 150, a voice output unit 160, an input device 170, a storage unit 180, and a control unit 190. Depending upon the embodiment of the present invention, the holographic display device 100 may further include an image recording device 195.

For example, the holographic display device 100 corresponds to an intelligent display device equipped with a computer-supported function in addition to a broadcast receiving function. Herein, since the holographic display device 100 can perform internet functions while being dedicated to the broadcast receiving function, the holographic display device 100 according to the present invention may be provided with a convenient user interface, such as a manual input device, a touch screen, a touch pad, or a magic remote controller. Additionally, with the support of wired or wireless internet functions, the holographic display device 100 may be connected to the internet and the supporting computer, so as to be capable of performing e-mailing, web-browsing, e-banking or gaming functions. Herein, b in order to perform such variety of functions, a universal Operating System (OS) may be used. For example, since diverse applications may be easily added to or delete from a general OS kernel, a variety of user-friendly functions may be performed. More specifically, for example, the holographic display device 100 may correspond to a network television (TV), a Hybrid Broadcast Broadband TV (HBBTV), a smart TV, and an Open Hybrid TV (OHTV). And, in some case the holographic display device 100 may also be adopted to mobile devices, smart phones, personal computers (PCs), and electric devices.

The receiving unit 101 may receive broadcast data, video data, audio data, information data, and application data. The video data may correspond to video data for displaying 2-dimensional (2D) images and video data for displaying 3-dimensional (3D) images. Additionally, the 3D image may include at least one of a hologram and a stereoscopic image. Herein, the hologram may correspond to a Computer-Generated Hologram (CGH).

The receiving unit 101 may include a tuner 110, a demodulator 120, a mobile communication unit 115, a network interface unit 130, a voice detecting unit 133, and an external signal receiving unit 135. The tuner 110 may receive a stream signal including data through a broadcast network, and the demodulator 120 demodulates the received stream signal. The mobile communication unit 115 may include data through a mobile communication network, such as a 2G communication network, a 3G communication network, a 4G communication network, and so on. Additionally, the network interface unit 130 may transmit and receive IP packets through the network, and the external signal receiving unit 135 may receive applications and contents from an external device and may receive an image frame from the image recording device 195. Herein, the image frame may correspond to an image frame, which is recorded by the user.

The demultiplexer 140 demultiplexes the stream signal, which is outputted from the demodulator 120, into a video signal and an audio signal. Additionally, the mobile communication unit 115, the network interface unit 130, and the external signal receiving unit 135 may receive image data, sound data, broadcast data, information data, and application data.

The video decoder 144 decodes the video signal, which is demultiplexed by the demultiplexer 140, and, then, the video decoder 144 outputs the decoded video signal to the display unit 150.

The audio decoder 148 decodes the audio signal, which is demultiplexed by the demultiplexer 140, and, then, the audio decoder 148 outputs the decoded audio signal to the display unit 150.

The display unit 150 displays an image 152. And, the image 152 may correspond to a hologram. The display unit 150 may include a Spatial Light Modulator (SLM), which indicates an interference fringe of the hologram. And, the display unit 150 may also include an optical device, such as a lens or a mirror, which converts the interference fringe indicated by the Spatial Light Modulator (SLM) to an image.

The spatial light modulator spatially modulates light. The spatial light modulator refers to a device for controlling intensity, color, and/or phase of light beams, by switching, blanking, or modulating the light beams emitted from one independent light source or from a plurality of independent light sources. The spatial light modulator includes a matrix of controllable pixels. And, by changing (or modifying) the amplitude and/or phase of the transmitting light, the pixels may reconfigure the object points. The spatial light modulator may be discretely or continuously implemented as an Acousto-optic modulator (AOM), and may be configured of a liquid crystal display (LCD).

The spatial light modulator indicates an interference fringe in accordance with a hologram value of the hologram generated by the controller 190. Light forming the interference fringe indicated on the spatial light modulator is propagated to the user's eyes, thereby reconfiguring a 3-dimensional (3D) scene (hereinafter referred to as a scene). The scene may be reconfigured and displayed (or shown) from a visibility range within a cyclic interval for reconfiguring the hologram. Herein, the visibility range corresponds to a limited range of visibility high enough for the user to view the entire reconfigured scene. Herein, wave fields within the visibility range overlap one another, so that the reconfigured scene can be displayed to the user. The visibility range may correspond to the user's eyes or may be close to the user's eyes. The visibility range may move along X, Y, and Z directions, and the visibility range may track the user's position in accordance with a disclosed position detecting method or tracking method. Two different visibility ranges may be used. In other words, a visibility range for each eye may be used. Additionally, coding may be performed so that the viewer can view individual objects or the entire scene as being placed behind the spatial light modulator. Hereinafter, a Viewing Window is defined to signify the visibility range.

Hereinafter, each point configuring the reconfigured 3D scene will be defined as an Object Point.

Additionally, the display unit 150 may be connected to the control unit 190 and operated accordingly. The display unit 150 may display a graphic user interface (GUI) 153, which provides an interface that can be easily used between the user of the holographic display device and its management system or an application being executed within the management system.

The voice output unit 160 receives sound data from the audio decoder 148 and the control unit 190 and may output sound (or voice) 161 through which the received sound data are being played back.

The input device 170 may correspond to a touch screen being positioned over the display unit 150 or in front of the display unit 150 and may correspond to a communication unit receiving a signal from a remote controller 111. The input device 170 may receive a remote controller transmission signal from the remote controller 111.

Depending upon a portion of the embodiment of the present invention, the receiving unit 101 may correspond to a communication unit receiving a signal from the remote controller 111. More specifically, the external signal receiving unit 135 may receive a remote controller transmission signal from the remote controller 111.

The storage unit 180 generally provides a space for storing a program code and data being used by the holographic display device 100. Herein, the program code may correspond to a program code of an application, which is received by the receiving unit 101, and a program code of an application, which is stored when fabricating the holographic display device 100. Additionally, the application may be written in a programming language, such as HTML, XML, HTML5, CSS, CSS3, Java Script, Java, C language, C++, Visual C++, and C#.

The storage unit 180 may store a look-up table for calculating hologram values of sub-holograms. Each sub-hologram corresponds to a portion of an entire hologram for reconfiguring the object points, which are included in a scene being reconfigured as a hologram. And, the entire hologram may be generated by overlapping the hologram values of the sub-holograms. The hologram value may signify a pixel value corresponding to a controllable hologram-pixel of the spatial light modulator. In case of displaying colors, the hologram-pixel may include multiple sub-pixels indicating primary colors, and the hologram value may correspond to pixel values of the multiple sub-pixels. Additionally, the hologram value signifies a Hologram Point value of the corresponding hologram. Hereinafter, a Pixel will be defined as a Hologram-Pixel or a Hologram Point.

As a portion of the embodiment of the present invention, the look-up table may include a phase value for calculating hologram values of the sub-pixels. Additionally, the look-up table may store information for displaying the interference fringe of sub-holograms.

The storage unit 180 may store different forms of look-up tables for a depth value of each object point. Additionally, the look-up table may be stored in the storage unit 180 for each depth value, and object points having the same depth value may have the same look-up table.

The storage unit 180 may store at least one look-up table having a partial size of the size of each sub-hologram. Herein, the partial size may include at least one of one half of the size of the sub-hologram, one quarter of the size of the sub-hologram, the size of one line, and one half of the size of one line. At least one look-up table having a partial size of the size of the sub-hologram may include information for calculating a hologram value included in one of a half portion of the sub-hologram, a quarter portion of the sub-hologram, a portion of one line, and a half portion of one line. The size of the sub-hologram may correspond to a resolution, and the look-up table may have a partial resolution of the full resolution of the sub-hologram.

The storage unit 180 may be implemented as a read-only memory (ROM), a random access memory (RAM), a hard disk drive, and so on. A program code and data may exist in a detachable storage means, and, when required, the program code and data may be loaded or installed to the holographic display device 100. Herein, the detachable storage means may include a CD-ROM, a PC-CARD, a memory card, a floppy disk, a magnetic tape, and a network component.

The control unit 190 executes a command (or instruction) and performs operations related to the holographic display device 100. For example, the control unit 190 may use a command, which is searched from the storage unit 180, and may control the input and output between the components of the holographic display device 100 and may control the reception and processing of the data.

The control unit 190 executes the program code along with the management system and performs the operations of generating and using data. The management system is generally disclosed, and, therefore, detailed description of the same will be omitted for simplicity. For example, the management system may include Windows group OS, Unix, Linux, Palm OS, DOS, Android, Macintosh, and so on. The management system, other computer codes and data may exist in the storage unit 180, which is connected to the control unit 190 and operates accordingly.

The control unit 190 may be implemented on a single chip, on multiple chips, or one multiple electrical assembly parts. For example, diverse architecture including a dedicated or embedded processor, a single-purpose processor, a controller, an ASIC, and so on, may be used with respect to the control unit 190.

The control unit 190 may recognize a User Action and may control the holographic display device 100 based upon the recognized user action. Herein, the user action may include selecting a physical button of the holographic display device or the remote controller, performing a predetermined gesture or selecting a soft button over a display surface of a touch screen, performing a predetermined gesture being recognized from an image, which is recorded by the image recording device 195, and performing a predetermined emission of a sound, which is recognized by voice recognition. Herein, the gesture may include a touch gesture and a spatial gesture.

The control unit 190 uses at least one look-up table so as to calculate hologram values of sub-holograms for reconfiguring object points. Herein, the look-up table may correspond to a look-up table received by the tuner 110, the mobile communication unit 115, the network interface unit 130, and the external signal receiving unit 135, and the look-up table may also correspond to a look-up table stored in the storage unit 180. Additionally, the look-up table may also have a partial size of the full size of a related sub-hologram.

The control unit 190 may calculate hologram values of sub-holograms for reconfiguring object points, which are included in a scene. The control unit 190 may generate a full hologram by overlapping the calculated hologram values of the sub-holograms. Additionally, the control unit 190 may control the display unit 150, so that the generated full hologram can be displayed.

The control unit 190 may calculate each position and size of the sub-holograms for reconfiguring the object points within the display surface of the spatial light modulator, based upon depth information of each object point and position information of the user. Additionally, among the hologram values of the sub-holograms, the control unit 190 may use the look-up table, so as to calculate hologram values marked on each pixel being included within the range of the spatial light modulator, which is indicated by the calculated position and size of the sub-holograms.

Additionally, the control unit 190 may calculate the position and size of each sub-hologram for reconfiguring each of the object points within the display surface of the spatial light modulator, for each of at least one object point included in the corresponding scene. And, the control unit 190 may calculate a hologram value indicated on each pixel included within the range of the spatial light modulator, which is indicated by the calculated position and size of the sub-holograms, by using the look-up table. Moreover, the control unit 190 may overlap the hologram values, which are calculated for each of the object point, so as to generate a full (or whole) hologram. The hologram value of the generated full (or whole) hologram may correspond to overlapped hologram values of the sub-holograms, which are calculated for each object point.

According to a portion of the embodiment of the present invention, the control unit 190 may acquire information related to the position of one or more pixels, according to which a hologram value is to be calculated by using a coordinate matching method, from the information included in at least one or more look-up tables having the partial size of a related sub-hologram. Thereafter, the control unit 190 may calculate the hologram value by using the acquired information.

According to a portion of the embodiment of the present invention, based upon the at least one or more look-up tables having the partial size of a related sub-hologram, the control unit 190 may generate a look-up table having a size respective to the size of a sub-hologram. And, the control unit 190 may then calculate a hologram value by using the generated look-up table. Herein, the generated look-up table may correspond to a look-up table having the same resolution as the sub-hologram.

The control unit 190 may receive an image frame of the user, which is recorded by the image recording device 195, from the image recording device 195. Then, the control unit 190 may search for pupil positions of the user from the received image frame. Thereafter, the control unit 190 may acquire position information of the user based upon the searched position of the user's pupils. Subsequently, the control unit 190 may decide the position of a viewing window based upon the acquired user position information.

The control unit 190 may calculate the position and size within the display surface of the spatial light modulator of the hologram for reconfiguring the object point, based upon the decided position of the viewing window and the depth information of the object point.

The input device 170 receives a gesture 171, and the control unit 190 executes commands for performing the operations related to the received gesture 171. Moreover, the storage unit 180 may include a gesture operation program 181, which may correspond to a portion of the management system or a separate application. The gesture operation program 181 generally includes a series of commands for recognizing the generation of a gesture 171 and for notifying to one or more software agents of the generated gesture 171 or of which action (s) is/are to be taken in response to the generated gesture 171.

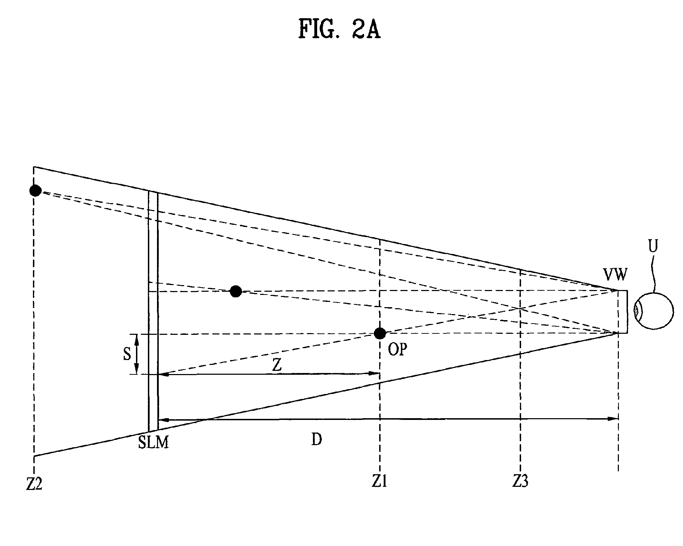

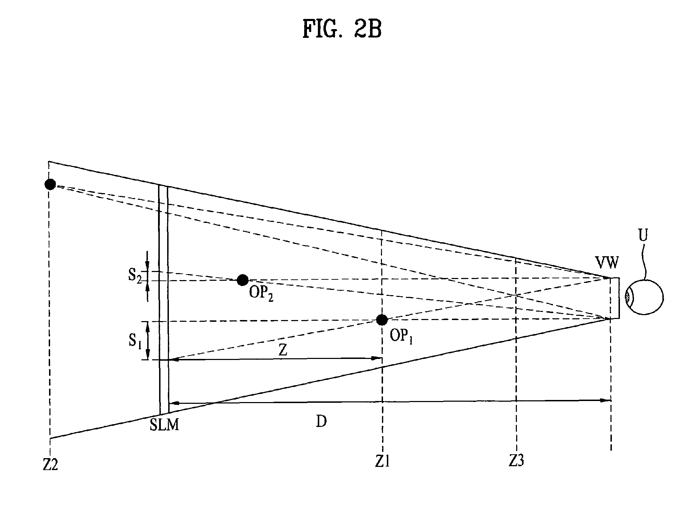

FIG. 2A and FIG. 2B illustrate object points within a 3D display area of the holographic display device according to the present invention.

Referring to FIG. 2A and FIG. 2B, VW represents a Viewing Window, OP indicates an Object Point, and SLM represents a Spatial Light Modulator. Herein, the spatial light modulator (SLM) may be included in the display unit 150 shown in FIG. 1. Plane Z1, plane Z2, and plane Z3 correspond to standard planes each sliced with respect to each depth in order to configure an Object Point (OP).

The viewing window (VW) is positioned in the area where the user's (U) pupils are located, and the user (U) may view a 3D display area, wherein a scene is being reconfigured as a hologram in the position of the viewing window (VW). A distance (D) corresponds to a distance between the viewing window (VW) and the spatial light modulator (SLM). And, the relation between this distance (D) and the size of the viewing window (VW), the pixel size of the spatial light modulator (SLM), and a wave $\lambda$ of the light source, which is used for the hologram, is shown below in Equation 1.

$$[\text{Equation 1}]$$

$$VW = \lambda * D/p$$

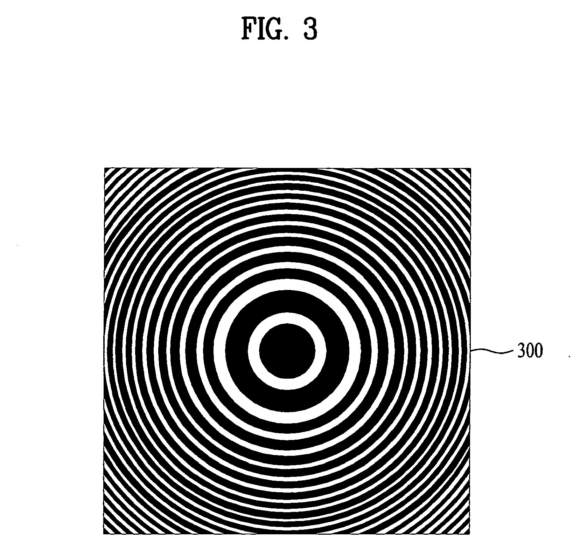

Herein, p represents a pixel size of the spatial light modulator (SLM). When the distance (D) for configuring the viewing window (VW) having a predetermined size is decided, the size (S) of a sub-hologram for configuring the object points (OPs) within the depth limitation areas (Z1 ~ Z2) may be decided as shown in FIG. 2A. And, the sub-hologram respective to the object point (OP), which is located in position Z1, may have the same fringe pattern as the fringe pattern shown in FIG. 3. And, a horizontal size and a vertical size of the look-up table may be decided in accordance with relative positions of the viewing window (VW) and the spatial light modulator (SLM) respective to the object point OP. The object points (OP) are configured within areas Z1 ~ Z2, and the size of the sub-hologram becomes the largest in the point (Z1) where the object point (OP) is located. The reason will be described with reference to Equation 2.

## [Equation 2]

$$Z{:}S = D{-}z{:}VW$$

Herein, Z corresponds to a distance between the spatial light modulator (SLM) and the object point (OP). S represents the size of a sub-hologram, D signifies the distance between the viewing window (VW) and the spatial light modulator (SLM), and VW represents the size of the viewing window.

When generating a sub-hologram for expressing (or displaying) an object point (OP) in a situation where the 3D display space is limited to areas Z1~Z2, the generated sub-hologram is formed to have a fringe pattern having the shape of a concentric circle, as shown in FIG. 3. And, a look-up table corresponding to this sub-hologram may also have the shape of a concentric circle identical to that of the fringe pattern shown in FIG. 3. The look-up table is formed to have the shape of a concentric circle is because the look-up table corresponds to a phase shape of a lens having the distance value z as the focal point, wherein z corresponds to the distance between the object point (OP) and the spatial light modulator (SLM). Herein, the lens has a phase shape of a concentric circle.

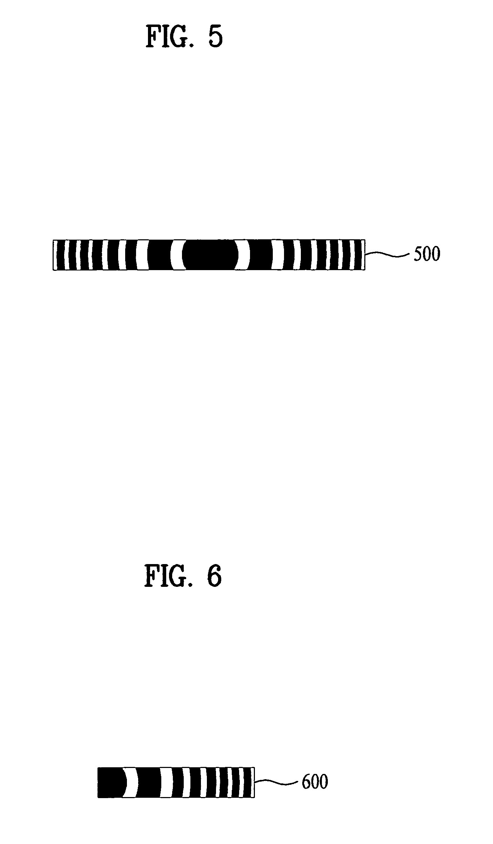

According to a portion of the embodiment of the present invention, when limiting the parallax, such as Horizontal Parallax Only (HPO), a sub-hologram having the shape of the fringe pattern 500 shown in FIG. 5 may be generated. And, a look-up table may have the same shape as the fringe pattern 500 of FIG. 5.

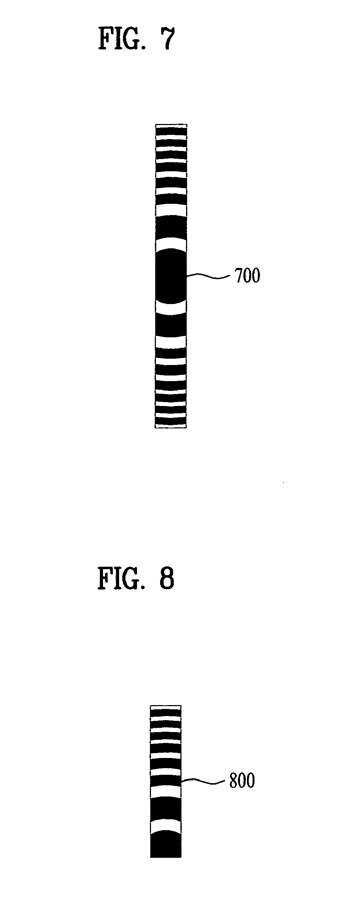

According to a portion of the embodiment of the present invention, when limiting the parallax, such as Vertical Parallax Only (VPO), a sub-hologram having the shape of the fringe pattern 700 shown in FIG. 7 may be generated. And, a look-up table may have the same shape as the fringe pattern 700 of FIG. 7.

The control unit 190 may calculate (or compute) sub-holograms each having the size of S1 and S2 with respect to object points OP1 and OP2. Then, the control unit 190 may overlap the calculated sub-holograms so as to generate (or create) one full (or whole) hologram. Instead of using a look-up table having the size corresponding to the sub-hologram, which may be used during the generation (or creation) of the sub-hologram, the control unit 190 may use a partial size of the look-up table of the corresponding sub-hologram, thereby being capable of extending the depth space of the 3D display area, when generating the sub-hologram, from areas Z1~Z2 to areas Z2~Z3. Moreover, when fixing the size of the 3D display area to areas Z1~Z2, and when using the partial size of the look-up table, the memory space may be reduced. And, accordingly, the storage space for storing a look-up table, which is used for generating a sub-hologram, may be reduced, and the speed (or rate) of reading the look-up table from the storage unit 180 may be increased.

In FIG. 2A, when the distance D is set to 2m, when the size of the viewing window VW is set to 6mm×6mm, and when the value Z is set to 1m, plane Z1 may be located at a positioned spaced apart from the spatial light modulator (SLM) at a distance of 1m, and, in accordance with the above-described Equation 2, the size S of the sub-hologram may be calculated to be equal to 6mm×6mm. Since the size S of the sub-hologram for expressing (or displaying) the object point (OP) is equal to 6mmx6mm, when converting this size to pixel units, and when the pixel size of the spatial light modulator (SLM) is equal to 156 μm, the size of the sub-hologram becomes equal to 38×38 pixels. The sub-hologram may have the form of a complex value, and the look-up table respective to the sub-hologram may also have the form of a complex value.

In order to calculate a sub-hologram, the holographic display device 100 is requires a memory size that can store a look-up table having the size of 38x38 pixels, which corresponds to the size of the sub-hologram, and the holographic display device 100 may read out the stored look-up table, so as to calculate the sub-hologram. The sub-hologram is calculated based upon information included in the stored look-up table and brightness information of an object point (OP), which is reconfigured by the sub-hologram.

When the space required for storing one complex number of equal to 4 bytes, a storage space of 38×38×4 bytes=5.8 Kbyte may be required. At this point, when only 1/4 size of the look-up table is stored, since the stored size is equal to 16×16×4 bytes=1 Kbyte, more than 4 times the size of the memory space may be reduced.

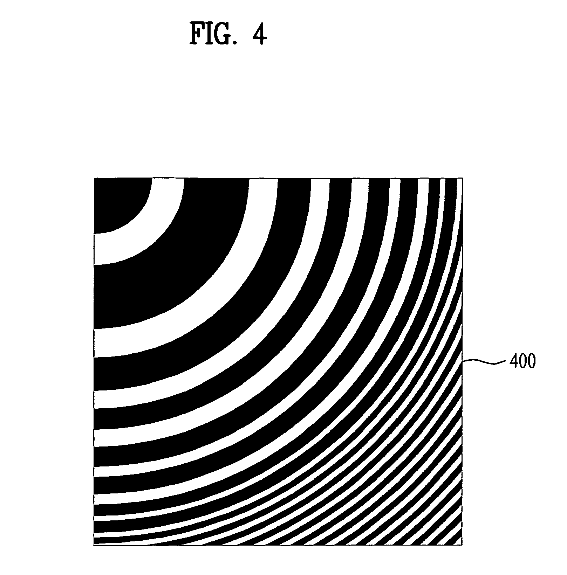

Additionally, when the look-up table 400 shown in FIG. 4 is stored in the memory space of 38x38x4 bytes, the size of the sub-hologram that can be generated by using the corresponding look-up table may be equal to 76×76 pixels, which corresponds to the size of 12mm×12mm. Referring to Equation 2, when substituting 12mm×12mm for the size S of the sub-hologram, the value Z may be calculated as 1.33m. And, due to the increased value Z, the object point of area Z3 may also be configured based upon the look-up table by using the same memory size.

FIG. 3 illustrates a fringe pattern of a sub-hologram for a single object point according to a first exemplary embodiment of the present invention. And, FIG. 4 illustrates information on a look-up table according to the first exemplary embodiment of the present invention in the form of an image.

Referring to FIG. 3 and FIG. 4, the sub-hologram 300 corresponds to the sub-hologram for reconfiguring the object point (OP) shown in FIG. 2A. The holographic display device 100 stores a portion of the look-up table respective to the sub-hologram 300 shown in FIG. 3 corresponding to an image shown in FIG. 4.

The look-up table 400 corresponding to the image of FIG. 4 has a partial size of the full size of the sub-hologram 300. More specifically, the look-up table 400 has a size corresponding to one quarter of the size of the sub-hologram 300. Additionally, the look-up table 400 includes information for calculating a hologram value included in the area corresponding to one quarter of the sub-hologram 300. For example, the look-up table 400 has a resolution corresponding to one quarter of the full resolution of the sub-hologram 300.

The holographic display device 100 calculates a memory size, which is required for storing a look-up table having a maximum size within an area having a limited 3D display space, and, then, the holographic display device 100 uses a memory having the calculated memory size. In a situation where the user wishes to extend the 3D display space from areas Z1~Z2 to areas Z2~Z3, as shown in FIG. 2, the memory size is also required to be enlarged (or extended). The holographic display device 100 configures a look-up table having the form of a sub-hologram 300 shown in FIG. 3 to have the form of the image shown in FIG. 4. And, by using the information on the look-up table having the form of the sub-hologram 300 shown in FIG. 3, the holographic display device 100 may acquire information on the look-up table of FIG. 4, thereby being capable of extending the depth area of the 3D display space to have a larger space as compared to when storing the information on the look-up table of the sub-hologram 300 shown in FIG. 3. If the same depth area of the 3D display space is proposed herein, the memory size for the look-up table is reduced to 1/4 of the full memory size when storing information on the look-up table 400 shown in FIG. 4, as compared to when storing the information on the look-up table 300 shown in FIG. 3.

According to a portion of the embodiment of the present invention, the control unit 190 may generate a look-up table having a size corresponding to the size of the sub-hologram 300 based upon the look-up table 400 of FIG. 4. And, by using the generated look-up table, the control unit 190 may calculate the hologram value of the sub-hologram 300. The control unit 190 may use the symmetric characteristic of the pattern of the look-up table, which corresponds to the structure of a concentric circle, so as to generate a look-up table of the sub-hologram 300 shown in FIG. 3 based upon the look-up table 400 of FIG. 4. By using one section of the look-up table respective to the sub-hologram 300, the control unit 190 may recover information on the remaining sections of the look-up table. Accordingly, in addition to the reduction of the hardware size of the memory, when opening (or loading) a look-up table value from the storage unit 180, since only a small portion of the look-up table value is loaded, as compared to the conventional method, the speed of the holographic display device 100 for reading the information on the look-up table may be increased to almost 4 times the conventional rate.

According to a portion of the embodiment of the present invention, by using a coordinate matching method based upon the look-up table 400, the control unit 190 may acquire information on a position related to the hologram value that is to be calculated, among the hologram values of the sub-hologram 300. And, then, the control unit 190 may calculate the hologram value by using the acquired information. The control unit 190 may use the look-up table 400 of FIG. 4 as a section of the look-up table of the sub-hologram shown in FIG. 3, so as to acquire information on the other sections of the look-up table of the sub-hologram 300 shown in FIG. 3 by using a pixel-unit coordinate matching method. Herein, the pixel-unit coordinate matching method corresponds to a method of reading out coordinate values, which match with a given pixel having predetermined coordinate values, from the look-up table 400, and converting the read coordinate values, so as to calculate the corresponding coordinate values. Herein, the pixel-unit coordinate matching method may calculate a sub-hologram without requiring any additional memory space for generating the initial look-up table.

FIG. 5 illustrates a fringe pattern of a sub-hologram for a single object point according to a second exemplary embodiment of the present invention. And, FIG. 6 illustrates information on a look-up table according to the second exemplary embodiment of the present invention in the form of an image.

Referring to FIG. 5 and FIG. 6, the sub-hologram 500 corresponds to a sub-hologram for reconfiguring the object point (OP) shown in FIG. 2A. The holographic display device 100 stores a portion of the look-up table respective to the sub-hologram 500, shown in FIG. 5, corresponding to the image shown in FIG. 6.

The look-up table 600 corresponding to the image of FIG. 6 has a partial size of the full size of the sub-hologram 500. More specifically, the look-up table 600 has a size corresponding to one half of the size of the sub-hologram 500. Additionally, the look-up table 600 includes information for calculating a hologram value included in the area corresponding to one half of the sub-hologram 500.

The holographic display device 100 configures a look-up table having the form of a sub-hologram 500 shown in FIG. 5 to have the form of the image shown in FIG. 6. And, by using the information on the look-up table having the form of the sub-hologram 500 shown in FIG. 5, the holographic display device 100 may acquire information on the look-up table of FIG. 6, thereby being capable of extending the depth area of the 3D display space to have a larger space as compared to when storing the information on the look-up table of the sub-hologram 500 shown in FIG. 5. If the same depth area of the 3D display space is proposed herein, the memory size for the look-up table is reduced to 1/2 of the full memory size when storing information on the look-up table 600 shown in FIG. 6, as compared to when storing the information on the look-up table 500 shown in FIG. 5.

FIG. 7 illustrates a fringe pattern of a sub-hologram for a single object point according to a third exemplary embodiment of the present invention. And, FIG. 8 illustrates information on a look-up table according to the third exemplary embodiment of the present invention in the form of an image.

Referring to FIG. 7 and FIG. 8, the sub-hologram 700 corresponds to a sub-hologram for reconfiguring the object point (OP) shown in FIG. 2A. The holographic display device 100 stores a portion of the look-up table respective to the sub-hologram 700, shown in FIG. 7, corresponding to the image shown in FIG. 8.

The look-up table 800 corresponding to the image of FIG. 7 has a partial size of the full size of the sub-hologram 700. More specifically, the look-up table 800 has a size corresponding to one half of the size of the sub-hologram 700. Additionally, the look-up table 800 includes information for calculating a hologram value included in the area corresponding to one half of the sub-hologram 700.

The holographic display device 100 configures a look-up table having the form of a sub-hologram 700 shown in FIG. 7 to have the form of the image shown in FIG. 8. And, by using the information on the look-up table having the form of the sub-hologram 700 shown in FIG. 7, the holographic display device 100 may acquire information on the look-up table of FIG. 8, thereby being capable of extending the depth area of the 3D display space to have a larger space as compared to when storing the information on the look-up table of the sub-hologram 700 shown in FIG. 7. If the same depth area of the 3D display space is proposed herein, the memory size for the look-up table is reduced to 1/2 of the full memory size when storing information on the look-up table 800 shown in FIG. 8, as compared to when storing the information on the look-up table 700 shown in FIG. 7.

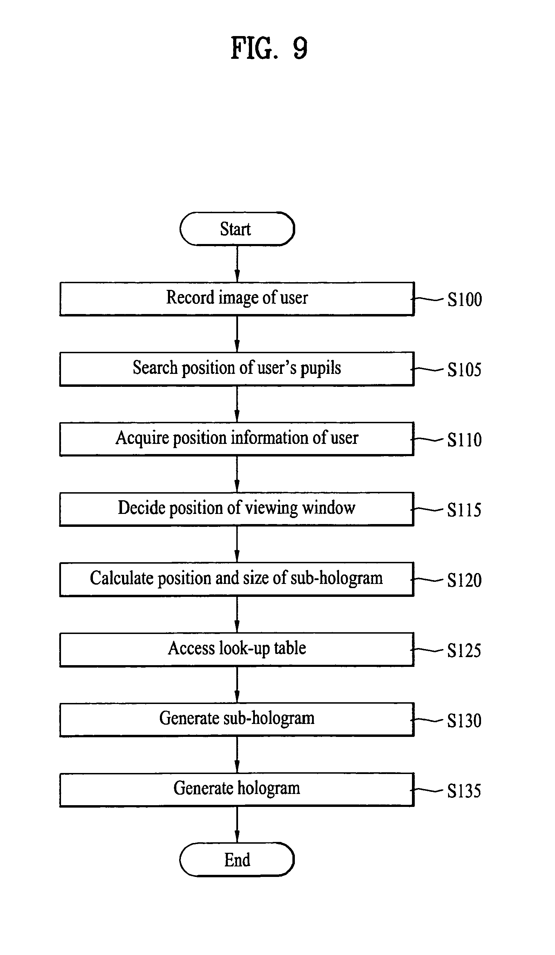

FIG. 9 illustrates a flow chart showing preferred process steps for performing a method for generating a hologram according to the present invention.

Referring to FIG. 9, the image recording device 195 records an image of the user U (S100).

The control unit 190 detects the position of pupil of the user U based upon the image of the user U, which is recorded by the image recording device 195 (S105).

The control unit 190 acquires information on the position of the user U based upon the detected pupil position (S110).

The control unit 190 decides the position of the viewing window (VW) based upon the acquired user position information (S115). Additionally, in step S115, the control unit 190 may decide the 3D display space. Moreover, the control unit 190 may decide a depth limitation area of the 3D display space.

The control unit 190 calculates the position and size of a sub-hologram S1 within the surface of the spatial light modulator based upon the decided position of the viewing window (VW) and the depth information of the object point (OP1) (S120). Herein, the control unit 190 may calculate the position and size of the sub-hologram S1 by using Equation 2.

The control unit 190 accesses at least one look-up table being related to the sub-hologram S1 from the storage unit 180 (S125). Herein, the look-up table may have a partial size of the full size of the sub-hologram S1. Additionally, the at least one look-up table may include the look-up table 400 shown in FIG. 4, the look-up table 600 shown in FIG. 6, and the look-up table 800 shown in FIG. 8.

The control unit 190 calculates a hologram value of the sub-hologram S1, by using the at least one accessed look-up table (S130). Herein, the sub-hologram S1 may be calculated based upon information included in the look-up table, which is accessed in step S125, and brightness information of an object point (OP), which is reconfigured by the sub-hologram.

According to a portion of the embodiment of the present invention, the control unit 190 may generate a look-up table having a size corresponding to the size of the sub-hologram S1, based upon the accessed look-up table, and the control unit 190 may then calculate the hologram value of the sub-hologram S1 by using the generated look-up table.

According to a portion of the embodiment of the present invention, the control unit 190 may acquire information on a position related to the hologram value that is to be calculated, among the hologram values of the sub-hologram S1, by using the coordinate matching method based upon the accessed look-up table. And, by using the acquired information, the control unit 190 may calculate the hologram value.

The control unit 190 may repeat the process steps S120 to S130 for object point OP2. Additionally, among the object points included in the corresponding scene, the control unit 190 may repeat the process steps S120 to S130 for each of the at least one or more object points.

The control unit 190 then overlaps the sub-holograms each including the hologram value, which is calculated by repeating the process steps S120 to S130 (S135). Herein, a hologram may be generated (or created) by overlapping the sub-holograms. When the hologram value of the generated hologram is supplied to the spatial light modulator (SLM), and when irradiating light to the spatial light modulator (SLM), the user U may be capable of viewing the scene, which is reconfigured of the generated hologram.

Herein, the holographic display device and the method for generating a hologram according to the present invention will not be limited only to the exemplary embodiments of the present invention, which are described above. And, therefore, all or a portion of each exemplary embodiment of the present invention presented herein may be selectively combined, so that a wider range of variations can be realized.

Meanwhile, the holographic display device and the method for generating a hologram according to the present invention may be realized as a code that can be read by a processor provided in the holographic display device in a recording medium that can be read by a processor. The recording medium that can be read by the processor includes all types of recording devices storing data that can be read by the processor. Examples of the recording media that can be read by a processor may include ROMs, RAMs, CD-ROMs, magnetic tapes, floppy disks, optical data storing devices, and so on. Also, an exemplary recording medium being realized in the form of a carrier wave, such as a transmission via Internet, may also be included. Also, the recording medium that can be read by a processor may be scattered within a computer system, which is connected through a network. And, a code that can be read by the processor may be stored and executed by using a dispersion (or scattering) method.

As described above, the holographic display device and the method for generating a hologram may have the following advantages.

Since the holographic display device and the method for generating a hologram according to the present invention stores a partial value of the look-up table and uses the stored partial value of the look-up table, the present invention may extent the 3D display space while maintaining a memory size, which is required for storing the look-up table. The present invention may also reduce the memory capacity, which is required to the used for storing the look-up table, within the same 3D display space. Finally, by reducing the time that is consumed for reading out the look-up table from the memory, the holographic display device and the method for generating a hologram according to the present invention may generate holograms more quickly and swiftly.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents. It will also be apparent that such variations of the present invention are not to be understood individually or separately from the technical scope or spirit of the present invention.

**Claims**

1. A holographic display device generating a hologram comprising:

   a storage unit configured to store at least one look-up table each having a partial size of a full size of sub-holograms for reconfiguring object points, wherein the object points are included in a scene reconfigured of the generated hologram; and
   a control unit configured to use at least one look-up table each having the partial size, to calculate hologram values of the sub-holograms for reconfiguring object points and to generate the hologram by overlapping the hologram values of the sub-holograms, wherein the object points are included in the scene.

2. The holographic display device of claim 1, further comprising a spatial light modulator configured to indicate an interference fringe of the generated hologram.

3. The holographic display device of claim 2, wherein the control unit calculates a position and size of the sub-holograms within a surface of the spatial light modulator, based upon depth information of the object points and position information of a user and calculates hologram values marked on pixels included in a range of the spatial light modulator that is indicated by the calculated position and size.

4. The holographic display device of claim 1, wherein the control unit acquires information on a position of the sub-holograms, the position being related to the hologram values, from the information included in at least one look-up table having the partial size of a related sub-hologram by using a coordinate matching method, and wherein the control unit calculates the hologram values by using the acquired information.

5. The holographic display device of claim 1, wherein the control unit generates a look-up table having a size corresponding to the size of each sub-hologram based upon the at least one look-up table having the partial size of a related sub-hologram, and wherein the control unit calculates the hologram values by using the generated look-up table.

6. The holographic display device of claim 1, wherein the partial size includes at least one of a size corresponding to a half of the size of each sub-hologram, a size corresponding to a quarter of the size of each sub-hologram, a size corresponding to the size of one line, and a size corresponding to the size of a half of one line.

7. The holographic display device of claim 1, wherein the look-up table includes information for calculating a hologram value included in at least one of an area corresponding to one half, an area corresponding to one quarter, an area corresponding to one line, and an area corresponding to one half of a line of a related sub-hologram.

8. The holographic display device of claim 1, wherein different forms of look-up tables are stored in the storage unit with respect to a depth value of each object point.

9. The holographic display device of claim 8, wherein the look-up table is stored in the storage unit with respect to each depth value, and wherein look-up tables of object points having the same depth value are identical to one another.

10. The holographic display device of claim 1, wherein the look-up table includes a phase value for calculating hologram values of the sub-holograms.

11. The holographic display device of claim 1, wherein the control unit detects pupil positions of the user based upon a recorded image of the user, acquires position information of the user based upon the detected pupil positions, decides a position of a viewing window based upon the acquired user position information, and calculates position and size of each sub-hologram within a surface of a spatial light modulator based upon the decided position of the viewing window and depth information of each object point.

12. The holographic display device of claim 1, wherein a depth area of a three-dimensional (3D) display area, the 3D display area corresponding to a spatial area in which the scene is displayed, is extended in accordance with a ratio between a size of each sub-hologram and a size of the look-up table.

13. The holographic display device of claim 1, wherein a used capacity of a memory, the memory being configured to store the at least one look-up table, is reduced in accordance with a ratio between a size of each sub-hologram and a size of the look-up table.

14. A method for generating a hologram in a holographic display device including a storage unit and a spatial light modulator, the method comprising:

accessing at least one look-up table each having a partial size of a full size of sub-holograms for reconfiguring object points from the storage unit, wherein the object points are included in a scene reconfigured of the generated hologram; calculating hologram values of the sub-holograms for reconfiguring the object points by using the at least one accessed look-up table each having the partial size; and repeating the accessing step and the calculating step for the object points included in the reconfigured scene, thereby generating the hologram by overlapping the calculated hologram values of the sub-holograms.

15. The method of claim 14, further comprising:

detecting pupil positions of the user based upon a recorded image of the user, acquires position information of the user based upon the detected pupil positions; deciding a position of a viewing window based upon the acquired user position information; and calculating position and size of each sub-hologram within a surface of a spatial light modulator based upon the decided position of the viewing window and depth information of each object point.

## FIG. 1

EP 2 631 720 A1

# FIG. 2A

# FIG. 2B

FIG. 3

300

FIG. 4

400

FIG. 5

~ 500

FIG. 6

~ 600

# FIG. 7

700

# FIG. 8

800

# FIG. 9

```
            ┌─────────┐
            │  Start  │
            └─────────┘
                 │
                 ▼
    ┌──────────────────────────────┐
    │      Record image of user     │────  S100
    └──────────────────────────────┘
                 │
                 ▼
    ┌──────────────────────────────┐
    │  Search position of user's pupils │────  S105
    └──────────────────────────────┘
                 │
                 ▼
    ┌──────────────────────────────┐
    │  Acquire position information of user │────  S110
    └──────────────────────────────┘
                 │
                 ▼
    ┌──────────────────────────────┐
    │   Decide position of viewing window  │────  S115
    └──────────────────────────────┘
                 │
                 ▼
    ┌──────────────────────────────┐
    │ Calculate position and size of sub-hologram │────  S120
    └──────────────────────────────┘
                 │
                 ▼
    ┌──────────────────────────────┐
    │       Access look-up table    │────  S125
    └──────────────────────────────┘
                 │
                 ▼
    ┌──────────────────────────────┐
    │      Generate sub-hologram    │────  S130
    └──────────────────────────────┘
                 │
                 ▼
    ┌──────────────────────────────┐
    │       Generate hologram       │────  S135
    └──────────────────────────────┘
                 │
                 ▼
            ┌─────────┐
            │   End   │
            └─────────┘
```

## EUROPEAN SEARCH REPORT

Application Number

EP 13 00 0759

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAOJIE ZHANG ET AL: "<title>Computer-generated holograms for 3D objects using the Fresnel zone plate</title>", PROCEEDINGS OF SPIE, vol. 5636, 7 February 2005 (2005-02-07), pages 109-115, XP55061450, ISSN: 0277-786X, DOI: 10.1117/12.570412 | 1,2, 4-10, 12-14 | INV.<br>G03H1/08<br>G02B5/18<br>G03H1/22 |
| Y | * the whole document * | 3,11,15 | |
| X | KWON DO-WOO ET AL: "Memory size reduction of the novel look-up-table method using symmetry of Fresnel zone plate", PRACTICAL HOLOGRAPHY XXV: MATERIALS AND APPLICATIONS, SPIE, 1000 20TH ST. BELLINGHAM WA 98225-6705 USA, vol. 7957, no. 1, 10 February 2011 (2011-02-10), pages 1-7, XP060005335, DOI: 10.1117/12.876615 [retrieved on 2011-02-07] * the whole document * | 1,6-10, 13 | |
| X | JAE-MAN KIM ET AL: "Memory reduction of N-LUT method using sub-principle fringe patterns", INFORMATION AND COMMUNICATION TECHNOLOGY CONVERGENCE (ICTC), 2010 INTERNATIONAL CONFERENCE ON, IEEE, PISCATAWAY, NJ, USA, 17 November 2010 (2010-11-17), pages 205-206, XP031839815, DOI: 10.1109/ICTC.2010.5674659 ISBN: 978-1-4244-9806-2 * the whole document * | 1,6-10, 13 | TECHNICAL FIELDS SEARCHED (IPC)<br><br>G03H<br>G02B |

-/--

The present search report has been drawn up for all claims

| Place of search | Date of completion of the search | Examiner |
|---|---|---|
| Munich | 30 April 2013 | Noirard, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 00 0759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | P. W. M. TSANG ET AL: "Modern Methods for fast generation of digital holograms", 3D RESEARCH, vol. 1, no. 2, 1 June 2010 (2010-06-01), XP055053311, DOI: 10.1007/3DRes.02(2010)03 * paragraphs [0001], [02.1], [02.2] * ----- | 3,11,15 | |
| | | | **TECHNICAL FIELDS SEARCHED (IPC)** |

The present search report has been drawn up for all claims

| Place of search | Date of completion of the search | Examiner |
|---|---|---|
| Munich | 30 April 2013 | Noirard, Pierre |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)